# EUROPEAN PATENT APPLICATION

(11) **EP 4 745 430 A1**
(43) Date of publication of application: **20.05.2026**
(21) Application number: 24834239.6
(22) Date of filing: 17.05.2024
(51) Int. Cl.: F16H 3/54, F16D 13/52, F16D 43/206

(54) **TRANSMISSION DEVICE**

(30) Priority: 13.07.2023 JP 2023114884
(71) Applicant: Jatco Ltd., Shizuoka 417-8585 (JP)
(72) Inventor: YAGI Hidekazu, Fuji City, Shizuoka 4178585 (JP)
(74) Representative: Hoefer & Partner Patentanwälte mbB
(86) International application number: PCT/JP2024/018313
(87) International publication number: WO 2025/013413

(57) **Abstract**

[Problem] To reduce the time during which both a rotational torque and an actuator thrust act on a bearing. [Solution] This transmission device comprises: a first planetary gear mechanism; a second planetary gear mechanism; a first fastening mechanism; a second fastening mechanism; and a third fastening mechanism. The third fastening mechanism includes: a pressing part that fastens a fastening element; a spring that biases the pressing part in a fastening direction; an actuator that generates thrust in a release direction and that releases the fastening element by using the thrust to displace the pressing part in the release direction; and a bearing that, when the fastening element is to be released, receives the load of the spring compressed by the thrust. In a first speed-changing step, the transmission device fastens the first fastening mechanism and releases the second fastening mechanism and the third fastening mechanism, and in a second speed-changing step, the transmission device fastens the second fastening mechanism and releases the first fastening mechanism and the third fastening mechanism. The first speed-changing step is selected during emergency travel, which requires a larger driving force than during a normal start.

## Description

### [Technical Field]

The present invention relates to a transmission device.

### [Background Art]

Patent Document 1 discloses a transmission device. The transmission device shifts the rotation inputted from a motor via an input shaft, and outputs that to a differential mechanism via an output shaft. The transmission device comprises a plurality of planetary gear mechanisms, a plurality of planetary gear mechanisms, and a plurality of fastening elements. By switching between fastening and releasing of the plurality of fastening elements, the transmission device is able to switch the transmission path of rotation of the plurality of planetary gear mechanisms, and to achieve a plurality of gear positions.

### [Prior Art Documents]

### [Patent Documents]

[Patent Document 1] Chinese Patent Application Publication No. 107178585 Specification

### [Summary of the Invention]

### [Problems the Invention Is Intended to Solve]

For a fastening element, it is possible to use a normally closed type clutch, for example. With a normally closed type clutch, a piston that presses a friction plate is biased in the fastening direction by a spring. When releasing the clutch, by having thrust act in the release direction by an actuator, the piston is displaced in the release direction.

A rotating element of the clutch is supported on a fixing element that can rotate via a bearing, for example. On the bearing, rotational torque is received from the rotating element, and the thrust of the actuator acts when the clutch is released.

When the time in which rotational torque and thrust by the actuator both act on the bearing becomes long, friction becomes greater, and this may affect the durability of the bearing.

There is a demand to reduce the time in which both rotational torque and actuator thrust act on the bearing for transmission devices.

### [Means for Solving the Problems]

A transmission device according to a mode of the present invention comprises:
a first planetary gear mechanism having a first sun gear connected to an input shaft, a first carrier connected to an output shaft, and a first ring gear,
a second planetary gear mechanism having a second sun gear connected to the input shaft, a second carrier connected to the first ring gear, and a second ring gear,
a first fastening mechanism that can fasten the first ring gear and the second carrier to a first fixing element,
a second fastening mechanism that can fasten the second ring gear to a second fixing element, and
a third fastening member that can fasten the second ring gear to the input shaft, wherein
the third fastening mechanism has
a fastening element that is connected to the second ring gear and the input shaft,
a pressing part that fastens the fastening element by pressing the fastening element in the fastening direction which is one end side of the axial direction of the input shaft,
a spring that biases the pressing part in the fastening direction,
an actuator that generates thrust in the release direction which is the other end side of the axial direction of the input shaft, and by the pressing part being displaced in the release direction by that thrust, releases the fastening element, and
a bearing that supports a rotating element of the third fastening mechanism, and when the fastening element is released, receives the load of the spring compressed by the thrust, where
by switching between fastening and release of the first fastening mechanism, the second fastening mechanism, and the third fastening mechanism, a first gear position, a second gear position, and a third gear position are achieved,
in the first gear position, the first fastening mechanism is fastened, and the second fastening mechanism and the third fastening mechanism are released,
in the second gear position, the second fastening mechanism is fastened, and the first fastening mechanism and the third fastening mechanism are released,
in the third gear position, the third fastening mechanism is fastened, and the first fastening mechanism and the second fastening mechanism are released,
the second gear position is selected during normal start and during low speed travel,
the third gear position is selected during medium speed travel and during high speed travel, and
the first gear position is selected during emergency travel when greater drive force is required than during normal start.

### [Effect of the Invention]

According to one aspect of the present invention, in a transmission device, it is possible to reduce the time in which both rotational torque and actuator thrust act on a bearing.

### [Brief Description of the Drawings]

[FIG. 1] FIG. 1 is a skeleton diagram showing a power transmission device.
[FIG. 2] FIG. 2 is a drawing showing the structure of a clutch.
[FIG. 3] FIG. 3 is a drawing showing the clutch release state. This is a collinear diagram showing the rotation count (rotation speed) of each element of the gear mechanism in first gear to third gear.
[FIG. 4A] FIG. 4A is a schematic diagram for explaining a cam mechanism.
[FIG. 4B] FIG. 4B is a schematic diagram for explaining the cam mechanism.
[FIG. 5] FIG. 5 is a fastening chart for first gear to third gear.
[FIG. 6] FIG. 6 is a collinear diagram showing the rotation count (rotation speed) of each element of the transmission device for first gear to third gear.
[FIG. 7] FIG. 7 is a drawing showing the power transmission path for first gear.
[FIG. 8] FIG. 8 is a drawing showing the power transmission path for second gear.
[FIG. 9] FIG. 9 is a drawing showing the power transmission path for third gear.

### [Modes for Carrying Out the Invention]

In the following description, an example of a transmission device of one aspect of the present invention applied to a power transmission device mounted in a vehicle is explained. The power transmission device is a device comprising a motor which is a rotary electric machine, and a power transmission mechanism that transmits power of the motor to drive wheels. The power transmission mechanism comprises, for example, a gear mechanism and/or a differential mechanism (differential gear mechanism).

In the following description, when a second element (component, part, etc.) connected to a first element (component, part, etc.), a second element (component, part, etc.) connected downstream of the first element (component, part, etc.), and a second element (component, part, etc.) connected upstream of the first element (component, part, etc.) is noted, this means that the first element and the second element are connected with the ability for power to be transmitted. The power input side is upstream, and the power output side is downstream. The first element and the second element may also be connected via other elements (clutch, other gear mechanism, etc.).

"Overlaps when viewed from a prescribed direction" means that a plurality of elements are aligned in a prescribed direction, and has the same meaning as when "overlaps in a prescribed direction" is noted. "Prescribed direction" is, for example, an axial direction, radial direction, gravity direction, vehicle travel direction (vehicle forward direction, vehicle reverse direction), etc.

When a plurality of elements (components, parts, etc.) are illustrated aligned in a prescribed direction in a drawing, this can be regarded as there being a sentence in the description in the specification explaining that there is overlapping when viewed from a prescribed direction.

"Not overlapping when viewed from a prescribed direction," and "offset when viewed from a prescribed direction" mean that the plurality of elements are not aligned in the prescribed direction, and have the same meaning as when "not overlapping in a prescribed direction" and "offset in a prescribed direction" are noted. "Prescribed direction" is, for example, the axial direction, radial direction, gravity direction, vehicle travel direction (vehicle forward direction, vehicle reverse direction), etc.

When a plurality of elements (components, parts, etc.) are illustrated as not being aligned in a prescribed direction in a drawing, this can be regarded as there being a sentence in the description in the specification explaining that there is not overlapping when viewed from a prescribed direction.

"When viewed from a prescribed direction, a first element (component, part, etc.) is positioned between a second element (component, part, etc.) and a third element (component, part, etc.)" means that it is possible to observe that the first element is between the second element and the third element when observed from the prescribed direction. "Prescribed direction" is, for example, the axial direction, radial direction, gravity direction, vehicle travel direction (vehicle forward direction, vehicle reverse direction), etc.

For example, when the second element, the first element, and the third element are aligned along the axial direction in this order, when viewed from the radial direction, the first element is positioned between the second element and the third element. When it is illustrated that the first element is between the second element and the third element when viewed from the prescribed direction in a drawing, this can be regarded as there being a sentence in the explanation in the specification explaining that the first element is between the second element and the third element when viewed from the prescribed direction.

When two elements (components, parts, etc.) overlap when viewed from the axial direction, the two elements are coaxial.

"Axial direction" means the axial direction of the rotation shaft of the components constituting the device. "Radial direction" means the direction orthogonal to the rotation shaft of the components constituting the device. The components are, for example, a motor, a gear mechanism, a differential gear mechanism, etc.

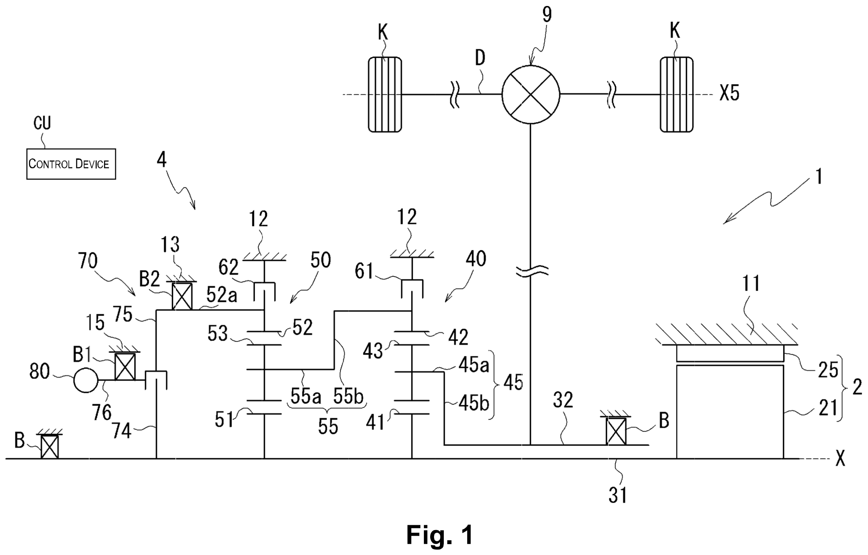

FIG. 1 is a skeleton diagram showing a power transmission device 1.

As shown in FIG. 1, the power transmission device 1 has a motor 2 (rotary electric machine) which is the power source for driving a vehicle. The power transmission device 1 comprises as a power transmission mechanism for transmitting the output rotation of the motor 2 an input shaft 31, a transmission device 4, an output shaft 32, a differential mechanism 9, and a drive shaft D.

The input shaft 31, the transmission device 4, and the output shaft 32 are disposed coaxially on a rotation axis X of the motor 2. Specifically, the "rotation axis X direction" corresponds to the "axial direction of the input shaft 31," and the "radial direction of the rotation axis X" corresponds to the "radial direction of the input shaft 31." The motor 2 is disposed at one end side (right side in the drawing) of the rotation axis X direction of the power transmission device 1, and the transmission device 4 is disposed at the other end side (left side in the drawing) of the rotation axis X direction. The motor 2 is connected to the transmission device 4 via the input shaft 31. The transmission device 4 is connected to the differential mechanism 9 via the output shaft 32. The rotation axis X extends along the vehicle width direction.

In the description hereafter, when it says, "one end side of the rotation axis X direction," that can be regarded as the right side in the drawing, and when it says, "the other end side of the rotation axis X direction," that can be regarded as the left side in the drawing.

The output shaft 32 is connected to the differential mechanism 9 via a reduction gear, counter gear, etc., (not illustrated). The reduction gear, the counter gear, etc., are provided mutually parallel with a gap open in the vehicle front-back direction which is the direction orthogonal to the rotation axis X.

The differential mechanism 9 is connected to left and right drive wheels K, K of the vehicle via the drive shaft D. The drive shaft D extends along an axis line X5 parallel to the rotation axis X.

The motor 2 has a rotor core 21 that rotates integrally with the input shaft 31, and a stator core 25 that surrounds the outer periphery of the rotor core 21 with a gap open.

When the motor 2 is driven, and the rotor core 21 rotates around the rotation axis X, the input shaft 31 rotates integrally with the rotor core 21. The rotation of the input shaft 31 undergoes a gear shift by the transmission device 4, and is outputted to the output shaft 32. The rotation outputted to the output shaft 32 is decelerated by a reduction gear, a counter gear, etc., (not illustrated), and transmitted to the differential mechanism 9. The rotation transmitted to the differential mechanism 9 is transmitted to the left and right drive wheels K, K of the vehicle via the drive shaft D.

The transmission device 4 is positioned on the downstream side of the motor 2 in the power transmission path in which the rotational force of the motor 2 is transmitted. The differential mechanism 9 is positioned on the downstream side of the transmission device 4 in the power transmission path.

The output shaft 32 can be a hollow cylinder, for example. The input shaft 31 extending in the rotation axis X direction from the motor 2 penetrates the interior of the output shaft 32 and is connected to the transmission device 4. The input shaft 31 and the output shaft 32 are provided to be able to rotate relatively around the rotation axis X. When viewed from the radial direction of the rotation axis X, a portion of the input shaft 31 overlaps the output shaft 32. Said another way, in the power transmission device 1, the input shaft 31 extends from the motor 2 to the transmission device 4 side, and the output shaft 32 has a structure in which it folds back from the transmission device 4 to the motor 2 side.

With this folded back structure, the output shaft 32 is disposed between the motor 2 which is positioned at one end side of the rotation axis X direction of the power transmission device 1, and the transmission device 4 which is positioned at the other end side. Said another way, the output shaft 32 is disposed in the center part of the power transmission device 1.

Furthermore, the differential mechanism 9 connected with the output shaft 32 via the reduction gear, the counter gear, etc., (not illustrated) is disposed in the center part in an axis line X5 direction (vehicle width direction) of the drive shaft D.

As shown in FIG. 1, the power transmission device 1 comprises a motor case 11, a gear case 12, and a clutch case 13. The motor case 11 houses the motor 2. The gear case 12 and the clutch case 13 house the transmission device 4. The gear case 12 is disposed at the other end side of the rotation axis X direction of the motor case 11, and is joined with the motor case 11. The clutch case 13 is disposed at the other end side of the rotation axis X direction of the gear case 12, and is joined with the gear case 12. The motor case 11, the gear case 12, and the clutch case 13 are disposed aligned in the rotation axis X direction, and integrally constitute the housing. The input shaft 31 and the output shaft 32 are inserted through the inside of the housing, and are supported by the housing via bearings B. Though omitted from the drawings, the differential mechanism 9 is for example housed in an axle case that is separate from the housing.

The transmission device 4 can comprise a plurality of gear mechanisms having different gear ratios, and a plurality of fastening mechanisms. The transmission device 4, by operating fastening and release of the plurality of fastening mechanisms, realizes a plurality of gear positions having different gear shift ratios by switching the transmission path of the rotation of the plurality of gear mechanisms.

The transmission device 4 has as the plurality of gear mechanisms a first planetary gear mechanism 40 (hereafter also simply referred to as "first gear mechanism 40") and a second planetary gear mechanism 50 (hereafter also simply referred to as "second gear mechanism 50"). The first gear mechanism 40 and the second gear mechanism 50 are disposed aligned on the rotation axis X. The first gear mechanism 40 is disposed between the motor 2 and the second gear mechanism 50 in the rotation axis X direction. The first gear mechanism 40 and the second gear mechanism 50 overlap with the motor 2 when viewed from the rotation axis X direction.

The first gear mechanism 40 has a first sun gear 41, a pinion gear 43 that meshes with the outer periphery of the first sun gear 41, a first carrier 45 that supports the pinion gear 43, and a first ring gear 42 in which the pinion gear 43 meshes with the inner periphery.

The first sun gear 41 is fixed to the outer periphery of the input shaft 31.

The first carrier 45 has a pinion shaft 45a that supports the pinion gear 43 rotatably, and a carrier plate 45b that supports the pinion shaft 45a. The inner periphery side of the carrier plate 45b is linked to the output shaft 32. The first ring gear 42 is linked to the second carrier 55 via a carrier plate 55b described later. The first ring gear 42 can rotate integrally with the second carrier 55.

In this way, in the first gear mechanism 40, the first sun gear 41 that is fixed to the input shaft 31 is an input element, and the first carrier 45 that is connected to the output shaft 32 is an output element.

The second gear mechanism 50 has a second sun gear 51, a pinion gear 53 that meshes with the outer periphery of the second sun gear 51, a second carrier 55 that supports the pinion gear 53, and a second ring gear 52 in which the pinion gear 53 meshes with the inner periphery.

The second sun gear 51 is fixed to the outer periphery of the input shaft 31. Said another way, the input shaft 31 is provided penetrating the inner periphery of the first sun gear 41 and the second sun gear 51 in the rotation axis X direction.

The second carrier 55 has a pinion shaft 55a that supports the pinion gear 53 rotatably, and a carrier plate 55b that supports the pinion shaft 55a. The second carrier 55 is linked to the first ring gear 42 of the first gear mechanism 40 via the carrier plate 55b.

The second ring gear 52 is linked to a clutch drum 75 of a clutch 70 described later via a link part 52a.

In this way, in the second gear mechanism 50, the second sun gear 51 that is fixed to the input shaft 31 is an input element, and the second carrier 55 that is connected to the first ring gear 42 of the first gear mechanism 40 is an output element.

The transmission device 4 comprises as fastening mechanisms a selectable one-way clutch 61 (first fastening mechanism), and a selectable one-way clutch 62 (second fastening mechanism). Hereafter, the selectable one-way clutch 61 is also noted as "SOWC 61." Hereafter, the selectable one-way clutch 62 is also noted as "SOWC 62." The SOWC 61 and the SOWC 62 are attached to the gear case 12. The SOWC 61 and the SOWC 62 fasten the elements of the gear mechanism to which they are connected to the gear case 12 (first fixing element, second fixing element).

The SOWC 61 is interposed between the first ring gear 42 and the gear case 12. In the gear case 12, the region that supports the first ring gear 42 constitutes the first fixing element. As described previously, the first ring gear 42 is connected to the second carrier 55 via the carrier plate 55b. For that reason, the first ring gear 42 and the second carrier 55 are supported on the gear case 12 (first fixing element) via the SOWC 61.

The SOWC 61 has three operating states (fastened state, released state, and engaged state). The operating state of the SOWC 61 is switched between the fastened state, the released state, and the engaged state by an actuator (not illustrated).

When the SOWC 61 is in a fastened state, the first ring gear 42 is fixed to the gear case 12 via the SOWC 61. Thus, the first ring gear 42 is in a state fixed to the gear case 12 together with the second carrier 55, and the rotation of each is in a restricted state.

When the SOWC 61 is in a released state, the first ring gear 42 and the second carrier 55 are rotatable in either direction of one direction or the other direction in the circumferential direction around the rotation axis X.

When the SOWC 61 is in an engaged state, the first ring gear 42 and the second carrier 55 are rotatable only in one direction.

The SOWC 62 is interposed between the second ring gear 52 and the gear case 12. In the gear case 12, the region that supports the second ring gear 52 constitutes the second fixing element.

The SOWC 62 also has three operating states (fastened state, released state, and engaged state). The operating states of the SOWC 62 are switched between the fastened state, the released state, and the engaged state by an actuator (not illustrated).

When the SOWC 62 is in the fastened state, the second ring gear 52 is fixed to the gear case 12 via the SOWC 62. Thus, the second ring gear 52 is in a state fixed to the gear case 12, and rotation of the second ring gear 52 is in a restricted state.

When the SOWC 62 is in a released state, the second ring gear 52 is rotatable in either direction of one direction or the other direction in the circumferential direction around the rotation axis X.

When the SOWC 62 is in an engaged state, the second ring gear 52 is rotatable only in one direction.

The SOWC 61, 62 can be items comprising a waiting mechanism constituted by a spring, etc., for example. The waiting mechanism is a mechanism that accumulates thrust added from the actuator. The SOWC 61, 62 can quickly switch between the released state, the fastened state, and the engaged state using the waiting mechanism.

The transmission device 4 comprises the clutch 70 as a third fastening mechanism. The clutch 70 is a direct coupling clutch that directly couples the second ring gear 52 to the input shaft 31. When the second ring gear 52 is directly coupled to the input shaft 31, the second ring gear 52 integrally rotates with the first sun gear 41 and the second sun gear 51 fixed to the input shaft 31. Details will be described later, but the clutch 70 functions as a direct coupling clutch for matching the rotation speed of the input shaft 31 and the output shaft 32.

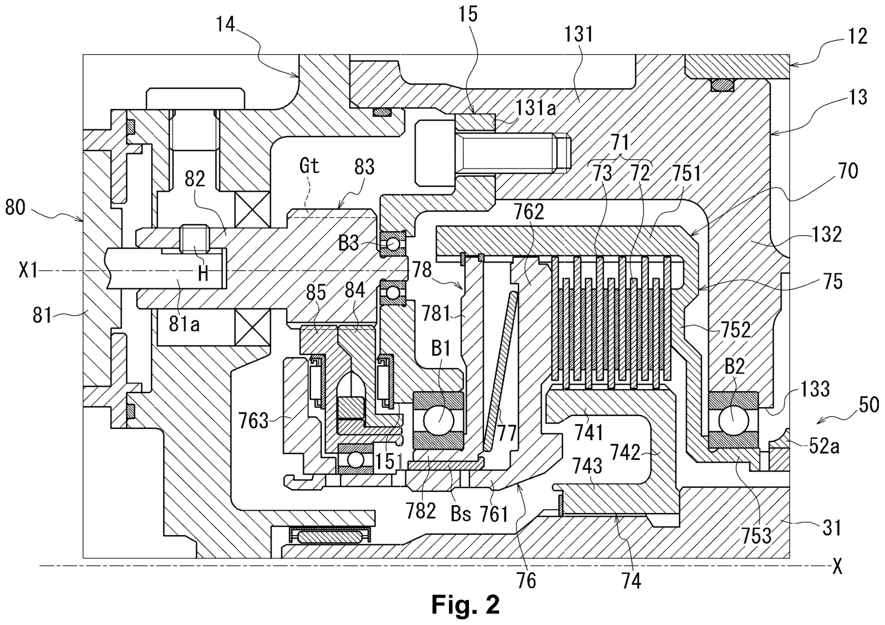

FIG. 2 is a drawing showing the configuration of the clutch 70. FIG. 2 shows the fastened state of the clutch 70.

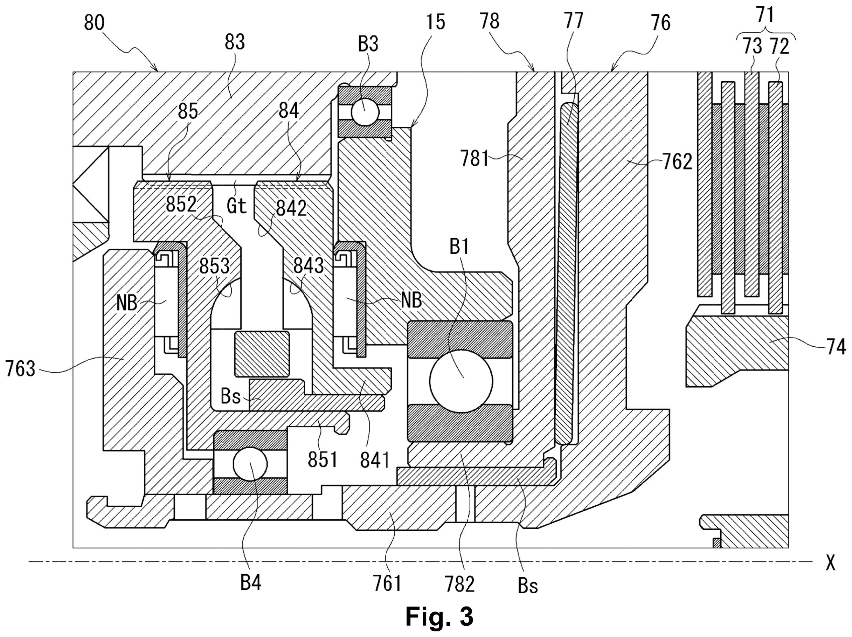

FIG. 3 is a drawing showing the released state of the clutch 70.

As shown in FIG. 2, the clutch 70 is housed in the clutch case 13. The clutch case 13 has a peripheral wall part 131 surrounding the rotation axis X. In the clutch case 13, one end side (right side in the drawing) of the peripheral wall part 131 in the rotation axis X direction is internally fitted in the gear case 12. The cover member 14 is internally fitted on the other end side (left side in the drawing). The opening of the other end side (left side in the drawing) of the clutch case 13 is closed by a cover member 14. Also, one end side of the peripheral wall 131 is formed having greater thickness on the inner diameter side than the other end side. For that reason, a step surface 131a extending to the inner diameter side is formed on the inner periphery side of the peripheral wall part 131. On the step surface 131a, a ring-shaped plate member 15 described later is attached from the rotation axis X direction.

With the clutch case 13, there is a wall part 132 positioned in a region internally fitted in the gear case 12. The wall part 132 extends to the inner diameter side of the peripheral wall part 131 from the region internally fitted in the gear case 12 in the peripheral wall part 131. The wall part 132 is a partition wall that partitions the space on the inside of the gear case 12 and the space on the inside of the clutch case 13 in the rotation axis X direction.

In FIG. 2, on the right side of the wall part 132, the second gear mechanism 50 described previously is positioned. On the left side of the wall part 132, the clutch 70 is positioned. The clutch 70 and the second gear mechanism 50 are adjacent with the wall part 132 sandwiched therebetween.

With the wall part 132, an opening 133 is provided in the region intersecting the rotation axis X. The opening 133 is formed with an opening diameter through which it is possible to insert the input shaft 31, and a link part 753 on the clutch 70 side. In the present embodiment, the link part 753 on the clutch 70 side is supported by the wall part 132 via a bearing B2. The link part 753 crosses the opening 133 from the clutch case 13 side to the gear case 12 side. Inside the gear case 12, the link part 753 is linked without the ability to rotate relatively to the link part 52a of the second ring gear 52 (see FIG. 1) of the second gear mechanism 50 described previously.

The clutch 70 has a clutch hub 74 that rotates integrally with the input shaft 31, a clutch drum 75 that rotates integrally with the second ring gear 52 of the second gear mechanism 50, and a plurality of friction plates 71 that are fastening elements. The clutch 70 also has a piston 76 biased by a disc spring 77 and an electric actuator 80 as the mechanism for switching between fastening and release of the plurality of friction plates 71.

The clutch hub 74 is disposed on the outer periphery of the input shaft 31. The clutch hub 74 has a cylindrical peripheral wall part 741, a bottom part 742 extending to the inner diameter side from one end of the peripheral wall part 741 in the rotation axis X direction, and a link part 743 with the input shaft 31.

The link part 743 is a cylindrical part that is externally fitted on the input shaft 31. The link part 743 is spline fitted to the outer periphery of the input shaft 31, and rotates integrally with the input shaft 31.

The bottom part 742 extends radially outward from the outer periphery of the wall part 132 side of the link part 743.

The peripheral wall part 741 is a cylindrical part surrounding the rotation axis X. The inner periphery of the peripheral wall part 741 and the outer periphery of the input shaft 31 face each other with a gap open in the radial direction of the rotation axis X. A drive plate 72 constituting the friction plate 71 is spline fitted to the outer periphery of the peripheral wall part 741. The drive plate 72 can be displaced in the rotation axis X direction (left-right direction in the drawing) in a state with relative rotation with the peripheral wall part 741 restricted.

On the outer diameter side of the peripheral wall part 741, a peripheral wall part 751 of the clutch drum 75 is positioned.

The clutch drum 75 has the peripheral wall part 751 surrounding the outer periphery of the peripheral wall part 741 with a gap open, and a bottom part 752 extending to the inner diameter side of the peripheral wall part 751 from one end in the rotation axis X direction. The clutch drum 75 is connected to the link part 753 described previously at an end part of the inner diameter side of the bottom part 752.

The driven plate 73 that constitutes the friction plate 71 is spline fitted to the inner periphery of the peripheral wall part 751. The driven plate 73 can be displaced in the rotation axis X direction (left-right direction in the drawing) in a state with relative rotation with the peripheral wall part 751 restricted.

The driven plate 73 and the drive plate 72 are aligned alternately in the rotation axis X direction.

When viewed from the friction plate 71, the piston 76 is positioned on the opposite side (left side in the drawing) to the bottom part 752 of the clutch drum 75.

The piston 76 has a cylindrical base 761. A pressing part 762 is provided at one end of the base 761 in the rotation axis X direction. When viewed from the rotation axis X direction, the pressing part 762 forms a disk shape, and extends in the radial direction outward from the outer periphery of the base 761. The outer periphery of the pressing part 762 is spline fitted to the inner periphery of the peripheral wall part 751 on the clutch drum 75 side.

The piston 76 is supported to be able to move in the rotation axis X direction in a state with relative rotation with the clutch drum 75 restricted.

A disk-shaped facing part 763 is fixed externally fitted on the other end of the base 761 in the rotation axis X direction.

With the clutch drum 75, a retainer 78 is provided on the inner periphery of the peripheral wall part 751. The retainer 78 comprises a ring-shaped holding unit 781 in which the outer periphery is spline fitted to the peripheral wall part 751 of the clutch drum 75, and a cylinder part 782 connected to the inner periphery of the holding unit 781. The holding unit 781 has movement in the rotation axis X direction restricted by a snap ring, etc.

In the cylinder part 782, the outer diameter side of the base 761 of the piston 76 extends to the other end side (left side in the drawing) in the rotation axis X direction. The cylinder part 782 is inserted from the rotation axis X direction in an opening 151 of the plate member 15. The outer periphery of the cylinder part 782 is supported by the plate member 15 via a bearing B1.

A bush Bs is interposed between the inner periphery of the cylinder part 782 and the outer periphery of the base 761 of the piston 76. The piston 76 can move relatively with respect to the retainer 78 and be relatively displaced in the circumferential direction around the rotation axis X. Instead of the bush Bs, a bearing may also be interposed.

The disc spring 77 is disposed between the holding unit 781 of the retainer 78 and the pressing part 762 of the piston 76.

The disc spring 77 is ring-shaped when viewed from the rotation axis X direction, and forms a cone shape in the cross section view along the rotation axis X direction. The disc spring 77 is externally fitted on the base 761 of the piston 76. In the rotation axis X direction, in the disc spring 77, the outer diameter side contacts the pressing part 762, and the inner diameter side is disposed to contact the holding unit 781 of the retainer 78.

In a pre-compressed state, the disc spring 77 is held between the holding unit 781 on the retainer 78 side and the pressing part 762 on the piston 76 side. As noted previously, the retainer 78 has movement in the rotation axis X direction restricted. For that reason, the piston 76 is biased to the friction plate 71 side by the elastic force of the disc spring 77.

In the present embodiment, the piston 76 is pressed against the friction plate 71 from the rotation axis X direction by the biasing force that acts from the disc spring 77. In this state, the driven plate 73 and the drive plate 72 are compressed in the rotation axis X direction, and are made to be fastened without the ability to rotate relatively.

When the driven plate 73 and the drive plate 72 are fastened without the ability to rotate relatively, the clutch hub 74 on the drive plate 72 side and the clutch drum 75 on the driven plate 73 side are linked without the ability to rotate relatively.

In the present embodiment, the specification is such that the piston 76 is displaced to the side away from the wall part 132 (left side in the drawing) by the drive force of the electric actuator 80 described later. For that reason, while the drive force of the electric actuator 80 is not acting, the piston 76 restricts relative rotation between the driven plate 73 and the drive plate 72 by the biasing force acting from the disc spring 77 (spring).

Specifically, the clutch 70 is a so-called normally closed type clutch 70, and is made to maintain the fastened state when the electric actuator 80 is not operated.

As described above, with the clutch 70, the clutch hub 74 is linked without the ability to rotate relatively with the input shaft 31, and the clutch drum 75 is linked via the link part 753 without the ability to rotate relatively with the link part 52a of the second ring gear 52.

For that reason, in a state with the clutch hub 74 and the clutch drum 75 linked without the ability to rotate relatively, the input shaft 31 and the second ring gear 52 are linked without the ability to transmit rotation. Thus, the rotation of the input shaft 31 is made to be inputted to the second ring gear 52 via the clutch 70.

As shown in FIG. 3, when pressing of the plurality of friction plates 71 by the piston 76 is released by the drive force of the electric actuator 80 described later, fastening of the drive plate 72 and the driven plate 73 is released and relative rotation become possible. Having done that, relative rotation is possible for the clutch hub 74 and the clutch drum 75, and transmission of rotation from the input shaft 31 to the second ring gear 52 via the clutch 70 is blocked.

As shown in FIG. 2, the electric actuator 80 has an actuator motor 81, a shaft 82, a drive gear 83, a first driven gear 84 and a second driven gear 85 (driven gears).

The actuator motor 81 is provided on the outside of the clutch case 13. The actuator motor 81 is attached to, for example, the cover member 14 that closes the clutch case 13. An output shaft 81a of the actuator motor 81 uses the drive force supplied from a drive source (not illustrated) to rotate around an axis line X1 parallel to the rotation axis X. The actuator motor 81 is able to switch the rotation direction of the output shaft 81a between one direction and the other direction around the axis line X1.

The shaft 82 is externally fitted on the output shaft 81a of the actuator motor 81. The shaft 82 is connected to be unable to rotate relatively to the output shaft 81a via a hollow set screw H. For that reason, rotation of the actuator motor 81 is outputted to the shaft 82 from the output shaft 81a. The shaft 82 extends along the axis line X1 direction, penetrates the cover member 14 and extends into the clutch case 13. The shaft 82 is supported with the ability to rotate on the plate member 15 via a bearing B3 at the end part of the side opposite to the actuator motor 81 in the axis line X1 direction.

The drive gear 83 is formed integrally with the shaft 82. The drive gear 83 is positioned between the cover member 14 and the plate member 15 in the axis line X1 direction. The drive gear 83 is provided at a position overlapping in the radial direction of the rotation axis X with respect to the base 761 and the facing part 763 of the piston 76. Gear teeth Gt are formed on the outer peripheral surface of the drive gear 83. The first driven gear 84 and the second driven gear 85 mesh with the gear teeth Gt of the drive gear 83.

The first driven gear 84 and the second driven gear 85 are ring-shaped when viewed from the rotation axis X direction, and are externally fitted on the base 761 of the piston 76. The first driven gear 84 and the second driven gear 85 are positioned between the base 761 of the piston 76 and the drive gear 83 in the radial direction of the rotation axis X. The first driven gear 84 and the second driven gear 85 are disposed between the facing part 763 of the piston 76 and the plate member 15 in the rotation axis X direction.

The first driven gear 84 and the second driven gear 85 are disposed aligned in the rotation axis X direction. The first driven gear 84 is positioned at one end side of the second driven gear 85 in the rotation axis X direction. Gear teeth are formed on the outer periphery of the first driven gear 84 and the second driven gear 85, and mesh with the gear teeth Gt of the drive gear 83. As a result, the rotation of the drive gear 83 is transmitted to the first driven gear 84 and the second driven gear 85, and the first driven gear 84 and the second driven gear 85 rotate in the circumferential direction around the rotation axis X.

Here, the first driven gear 84 and the second driven gear 85 are formed to have a different number of teeth. For that reason, when the rotation of the drive gear 83 is transmitted, a phase difference is generated in the rotation of the first driven gear 84 and the second driven gear 85.

As shown in FIG. 3, cylindrical connection parts 841, 851 are provided respectively at the inner periphery of the first driven gear 84 and the second driven gear 85. The connection parts 841, 851 each protrude to one end side in the rotation axis X direction. The connection part 851 is positioned at the inner diameter side of the connection part 841. The connection parts 841, 851 are facing in the radial direction of the rotation axis X, and the bush Bs is interposed between the connection parts 841, 851.

The base 761 of the piston 76 is positioned at the inner diameter side of the connection part 851. A bearing B4 is interposed between the connection part 851 and the base 761 of the piston 76. Specifically, the first driven gear 84 and the second driven gear 85 are supported to be able to rotate relatively to the base 761 of the piston 76 via the bearing B4.

The first driven gear 84 faces the plate member 15 at one end side in the rotation axis X direction. A needle bearing NB is interposed between the first driven gear 84 and the plate member 15, and the first driven gear 84 is able to rotate relatively to the plate member 15.

The second driven gear 85 faces the facing part 763 of the piston 76 at the other end side in the rotation axis X direction. The needle bearing NB is interposed between the second driven gear 85 and the facing part 763. As a result, the second driven gear 85 is able to rotate relatively to the facing part 763.

As shown in FIG. 3, the surface of the other end side in the rotation axis X direction of the first driven gear 84 serves as an opposing surface 842 to the second driven gear 85. The surface of the one end side in the rotation axis X direction of the second driven gear 85 serves as an opposing surface 852 to the first driven gear 84.

Cam grooves 843, 853 are respectively provided on the opposing surfaces 842, 852. The cam grooves 843, 853 are recessed facing away from each other in the rotation axis X direction.

The cam grooves 843, 853 are formed in a prescribed angle range along the circumferential direction around the rotation axis X. Though an illustration is omitted, a plurality of cam grooves 843, 853 are provided at equal intervals in the circumferential direction on the opposing surfaces 842, 852. As an example, three cam grooves 843, 853 can be provided at intervals of 120° in the circumferential direction on the opposing surfaces 842, 852.

The cam grooves 843, 853 of the opposing surfaces 842, 852 are respectively formed at an equal distance in the radial direction from the rotation axis X, and are provided at positions facing in the rotation axis X direction. Though an illustration is omitted in FIG. 2 and FIG. 3, a rolling body is held between the cam grooves 843, 853 of the opposing surfaces 842, 852. Though a detailed description is noted later, the first driven gear 84 and the second driven gear 85 are displaced in the rotation axis X direction according to movement within the cam grooves 843, 853 of the rolling body. Specifically, the cam mechanism is constituted by the cam grooves 843, 853 of the first driven gear 84 and the second driven gear 85, and the rolling body.

The cam mechanism of the present embodiment is an item in which rotational motion inputted from the actuator motor 81 is converted to linear motion along the rotation axis X direction via the first driven gear 84 and the second driven gear 85. Specifically, the electric actuator 80, the first driven gear 84, and the second driven gear 85 constitute one linear actuator.

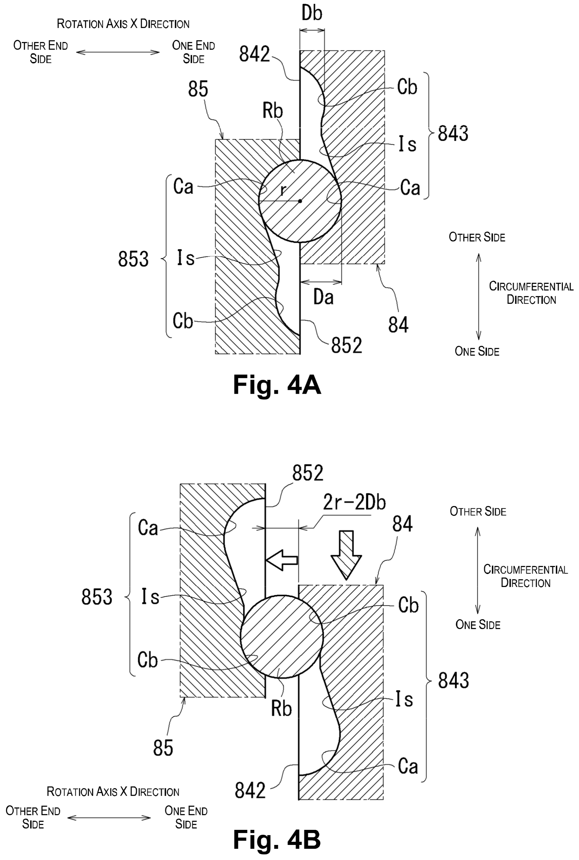

FIG. 4A and 4B are schematic diagrams for explaining the cam mechanism. FIG. 4A shows the state when a rolling body Rb is held between locking parts Ca, Ca, and FIG. 4B shows a state in which the rolling body Rb is held between locking parts Cb, Cb.

FIG. 4A and FIG. 4B show the state of the cam grooves 843, 853 of the first driven gear 84 and the second driven gear 85 viewed from the radial direction of the rotation axis X cut along the circumferential direction around the rotation axis X. In FIG. 4A and FIG. 4B, the rolling body Rb is shown as a spherical ball, but the rolling body Rb may also be a cylindrical or conical roller.

As shown in FIG. 4A, in the cam groove 843 of the first driven gear 84, the opposing surface 842 is formed recessed at one end side of the rotation axis X direction. The cam groove 843 is constituted from an inclined surface Is on which the rolling body Rb can roll, and locking parts Ca, Cb that lock the rolling body Rb. The locking part Ca is provided at one side (bottom side in the drawing) of the circumferential direction of the inclined surface Is, and the locking part Cb is provided at the other side (upper side in the drawing). The locking part Ca and the locking part Cb are hemispherical recesses having a radius of curvature that matches the outer peripheral edge of the rolling body Rb. The locking part Ca has a depth Da that matches the radius r of the rolling body Rb in the rotation axis X direction (Da ≒ r). The locking part Cb has a depth Db shallower than the locking part Ca in the rotation axis X direction (Db < Da).

The inclined surface Is of the cam groove 843 is inclined so as to be positioned from one end side to the other end side in the rotation axis X direction as it goes from the locking part Ca to the locking part Cb. Specifically, the cam groove 843 is formed so that the groove becomes gradually shallower as it goes from the locking part Ca to the locking part Cb.

The cam groove 853 of the second driven gear 85 is formed with the opposing surface 852 recessed at the other end side in the rotation axis X direction. The cam groove 853 has a shape in which the cam groove 843 is inverted in the rotation axis X direction and the circumferential direction. The cam groove 853 is constituted from the inclined surface Is on which the rolling body Rb is able to roll, and locking parts Cb, Ca that lock the rolling body Rb. The locking part Cb is provided on one side (the bottom side in the drawing) of the circumferential direction of the inclined surface Is, and the locking part Ca is provided on the other side (the top side in the drawing). The inclined surface Is of the cam groove 853 is inclined so as to be positioned from the other end side to the one end side in the rotation axis X direction as it goes from the locking part Ca to the locking part Cb. Specifically, the cam groove 853 is formed so that the groove becomes gradually shallower as it goes from the locking part Ca to the locking part Cb.

When the actuator motor 81 (see FIG. 2) is driven and the drive gear 83 is rotated around the axis line X1, the first driven gear 84 and the second driven gear 85 that mesh with the drive gear 83 rotate in the circumferential direction around the rotation axis X. Here, as described previously, because there is a different number of teeth for the first driven gear 84 and the second driven gear 85, a phase difference occurs in the rotation of the first driven gear 84 and the second driven gear 85. In the present embodiment, there is a larger number of teeth in the first driven gear 84 than the number of teeth in the second driven gear 85. For that reason, when the drive gear 83 is rotated, the first driven gear 84 rotates faster than the second driven gear 85.

FIG. 4A shows a state in which the actuator motor 81 is not driven, and the first driven gear 84 and the second driven gear 85 do not rotate (a phase difference does not occur). The first driven gear 84 and the second driven gear 85 are disposed so that in a state when a phase difference does not occur, the locking part Ca of the cam groove 843 and the locking part Ca of the cam groove 853 are facing each other in the rotation axis X direction. The rolling body Rb is held between the locking parts Ca, Ca.

The locking parts Ca, Ca respectively have the depth Da from the surfaces of the opposing surfaces 842, 852.

The depth Da of the locking part Ca is set to a size that matches the radius r of the rolling body Rb. As shown in FIG. 4A, when the locking parts Ca, Ca face each other in the rotation axis X direction, a space of depth 2Da correlating to diameter 2r of the rolling body Rb is formed between the two locking parts Ca, Ca. Specifically, when the rolling body Rb is held between the locking parts Ca, Ca, the entire rolling body Rb is housed between the locking parts Ca, Ca. This results in a state with the opposing surface 842 of the first driven gear 84 and the opposing surface 852 of the second driven gear 85 abutting (the state shown in FIG. 2).

When the actuator motor 81 is driven and the drive gear 83 is rotated around the axis line X1, a phase difference occurs between the first driven gear 84 and the second driven gear 85. In specific terms, the number of teeth of the first driven gear 84 is greater than the number of teeth of the second driven gear 85, so the first driven gear 84 rotates faster than the second driven gear 85. As a result, a phase difference occurs between the first driven gear 84 and the second driven gear 85. Also, the cam grooves 843, 853 of the first driven gear 84 and the second driven gear 85 are moved relatively to one side and the other side in the circumferential direction by the amount of the phase difference.

As shown in FIG. 4B, with the present embodiment, the first driven gear 84 rotates faster than the second driven gear 85. For that reason, the cam groove 843 of the first driven gear 84 is shifted relatively to one side (cross hatched arrow in the drawing) in the circumferential direction with respect to the cam groove 853 of the second driven gear 85. By the cam groove 843 shifting to one side in the circumferential direction, the rolling body Rb is detached from the respective locking parts Ca of the cam grooves 843, 853, and rolls on the inclined surface Is facing the locking part Cb.

Here, as shown in FIG. 3, the plate member 15 is positioned at one end side in the rotation axis X direction of the first driven gear 84, so movement of the first driven gear 84 to the one end side is restricted. The facing part 763 that supports the second driven gear 85 is allowed to move in the rotation axis X direction together with the piston 76.

As shown in FIG. 4B, the inclined surface Is of the cam groove 843 is inclined so as to be positioned from one end side to the other end side in the rotation axis X direction as it goes from the locking part Ca to the locking part Cb. For that reason, the rolling body Rb moves to the other end side of the rotation axis X direction while rolling on the inclined surface Is. As a result, the second driven gear 85 holding the rolling body Rb by the cam groove 853 of the other end side is pressed by the rolling body Rb and moves to the other end side (white arrow in the drawing).

Furthermore, the inclined surface Is of the cam groove 853 is inclined to be positioned from the other end side to the one end side in the rotation axis X direction from the locking part Ca. For that reason, as the rolling body Rb rolls in the cam groove 853 facing the locking part Cb from the locking part Ca, the pushing amount of the second drive gear 85 by the rolling body Rb to the other end side becomes larger.

When the rolling body Rb rolls on the inclined surface Is of the cam grooves 843, 853 and reaches the locking parts Cb, Cb, it is held between the locking parts Cb, Cb as shown in FIG. 4B.

As shown in FIG. 4A, a depth Db of the locking part Cb is set to be smaller than the depth Da of the locking part Ca. Specifically, the depth Db of the locking part Cb is smaller than the radius r of the rolling body Rb. Specifically, when the rolling body Rb is held between the locking parts Cb, Cb, the rolling body Rb cannot be accommodated between the locking parts Cb, Cb, resulting in a state with a portion sticking out from the locking parts Cb, Cb. Specifically, when the rolling body Rb is held between the locking parts Cb, Cb, this results in a state with the opposing surface 842 of the first driven gear 84 and the opposing surface 852 of the second driven gear 85 being separated (state shown in FIG. 3). Here, the gap between the opposing surface 842 of the first driven gear 84 and the opposing surface 852 of the second driven gear 85 is according to the difference between the radius of the rolling body Rb and the depth Db of the locking part Cb (2r-2Db). This difference can be appropriately set according to the displacement amount required for the piston 76 when releasing the friction plate 71.

As shown in FIG. 3, when the second driven gear 85 is moved to the other end side in the rotation axis X direction by driving of the actuator motor 81, the second driven gear 85 presses the facing part 763 of the piston 76. As a result, thrust acts on the entire piston 76 to the other end side (release direction) in the rotation axis X direction. Specifically, by the thrust of the electric actuator 80, the piston 76 resists the biasing force of the disc spring 77 and moves to the other end side (release direction) in the rotation axis X direction. By the pressing part 762 of the piston 76 that was fastening the friction plate 71 moving to the other end side, the clutch 70 is released.

As shown in FIG. 3, the pressing part 762 of the piston 76 moves to the other end side while pressing the outer diameter side of the disc spring 77. Here, the retainer 78 that supports the inner diameter side of the disc spring 77 is supported on the plate member 15 via the bearing B1, and is spline fitted on the inner periphery part of the clutch drum 75 in a state with movement in the rotation axis X direction restricted.

Specifically, the retainer 78 has movement to the other end side in the rotation axis X direction restricted. For that reason, when thrust acts from the electric actuator 80 to the other end side in the rotation axis X direction, the outer diameter side of the disc spring 77 supported by the pressing part 762 approaches the inner diameter side supported by the retainer 78. As a result, the disc spring 77 is further compressed more than when the clutch 70 is in the released state.

The load by the compression of this disc spring 77 also acts on the bearing B1 via the retainer 78, and also acts on the bearing B2 via the retainer 78 and the clutch drum 75.

Said another way, when switching from fastening to release of the clutch 70, the thrust by the electric actuator 80 also acts on the bearings B1, B2 as the load of the compressed disc spring 77.

When the clutch 70 is fastened again, the actuator motor 81 and the drive gear 83 are rotated in the reverse direction to when being released. In this case as well, the first driven gear 84 rotates in the reverse faster than the second driven gear 85, so a phase difference occurs in the rotation of the first driven gear 84 and the second driven gear 85. For that reason, the cam groove 843 of the first driven gear 84 is shifted relatively to the other side (top side in FIG. 4B) of the circumferential direction with respect to the cam groove 853 of the second driven gear 85. As a result, the rolling body Rb separates the locking parts Cb, Cb (see FIG. 4B) of the cam grooves 843, 853, rolls on the inclined surfaces Is, Is, and returns to between the locking parts Ca, Ca (see FIG. 4A). At this time, the second driven gear 85 moves to one end side in the rotation axis X direction together with the piston 76 due to the restoration force of the disc spring 77 (see FIG. 3), resulting in a state again abutting the first driven gear 84. The pressing part 762 of the piston 76 again presses the friction plate 71 to one end side (fastening direction) of the rotation axis X direction by the biasing force of the disc spring 77. As a result, the clutch 70 is fastened again.

As shown in FIG. 1, the transmission device 4 comprises a control device CU that operates the plurality of fastening mechanisms (SOWC 61, 62, clutch 70), and controls switching of the gear position. The control device CU can be realized, for example, as one function of an ECU (Electronic Control Unit) that does comprehensive control of operation of a vehicle. The control device CU judges whether or not it is necessary to shift gears on the basis of, for example, a preset gear shift map, the vehicle speed and pressing amount of the accelerator pedal, etc., and operates the SOWC 61, 62 and the clutch 70 on the basis of the judgment result.

As described previously, the transmission device 4 comprises a plurality of gear mechanisms having different gear ratios (first gear mechanism 40, second gear mechanism 50).

With the transmission device 4 of the present embodiment, as an example, the gear ratio of the first gear mechanism 40 is set to be larger than the gear ratio of the second gear mechanism 50.

In the planetary gear mechanism, the smaller the value obtained by dividing the number of teeth of the sun gear by the number of teeth of the ring gear (λ value), the larger the gear ratio. Specifically, the λ value of the first gear mechanism 40 (number of teeth of the first sun gear 41/number of teeth of the first ring gear 42) is set to be smaller than the λ value of the second gear mechanism 50 (number of teeth of the second sun gear 51/number of teeth of the second ring gear 52).

The transmission device 4 has a first gear position, a second gear position, and a third gear position as three gear positions having different gear shift ratios (output rotation speed/input rotation speed).

The first gear position, as so-called emergency low, is selected during emergency travel requiring drive force greater than during normal start. "Emergency travel" includes starting of the vehicle and when traveling after starting. Emergency travel may include, for example, starting up a steep hill, starting in a state with heavy items loaded, traveling on a rough road such as muddy ground, etc., or the like.

The second gear position is selected during normal start and during low speed travel. Normal start may include starting on a flat road, starting in a state without heavy items loaded, and traveling on a road with well-maintained pavement, etc. The third gear position is selected during medium speed travel and during high speed travel. Specifically, with the transmission device 4, the second gear position and the third gear position are selected exclusively, and the first gear position for emergency low has a significantly shorter selection time than the second gear position and the third gear position.

Here, medium speed travel means faster speed than low speed travel, and high speed travel means faster speed than medium speed travel. None of low speed travel, medium speed travel, and high speed travel is limited to a specific speed range, and each is set as appropriate by the vehicle specifications, travel environment, etc.

In the explanation hereafter, "first gear position," "second gear position," and "third gear position" are also simply called "first gear," "second gear," and "third gear."

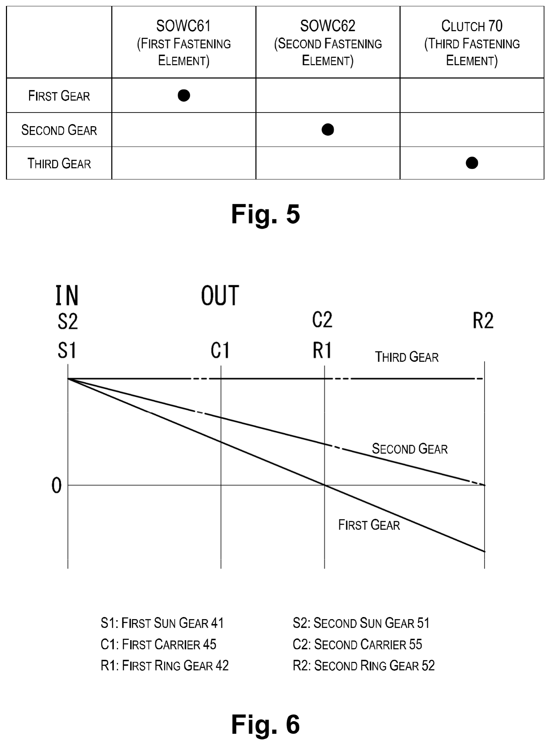

FIG. 5 is a fastening chart for first gear to third gear.

In FIG. 5, columns with elements in the fastened state are displayed with a black circle, and columns with elements in the released state are left blank.

FIG. 6 is a collinear diagram showing the rotation count (rotation speed) of each element of the transmission device 4 in first gear to third gear. The 0 in each vertical axis means rotation speed 0. The top side above 0 shows the rotation of one direction DA described later, and the lower side below 0 shows the rotation of the other direction DB described later. For convenience of explanation, the rotation speed of the input shaft 31 is the same for the first gear to third gear.

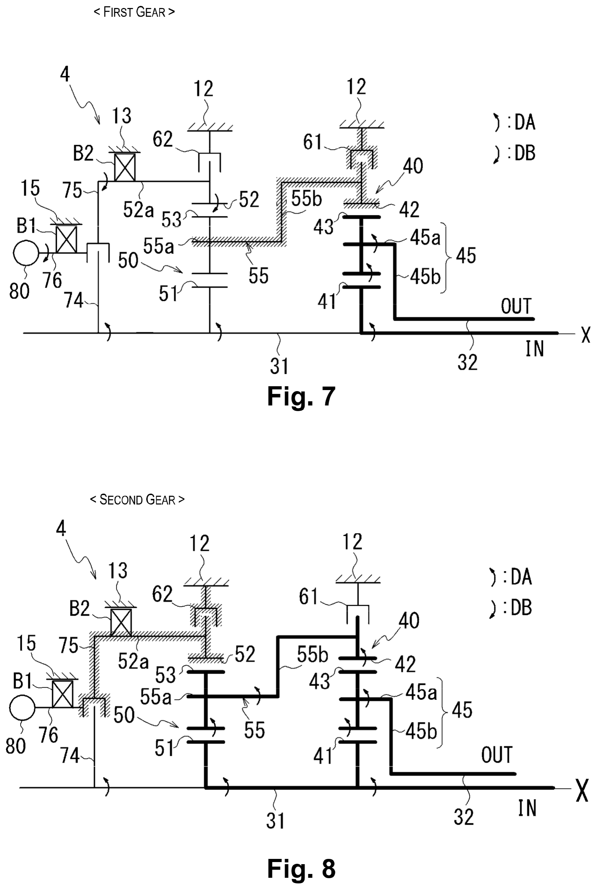

FIG. 7 is a drawing showing the power transmission path in first gear.

FIG. 8 is a drawing showing the power transmission path in second gear.

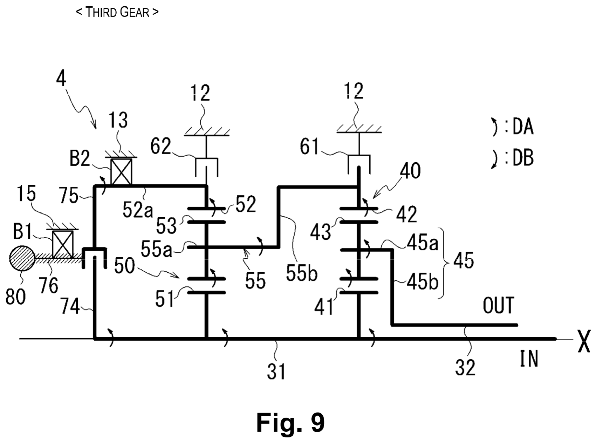

FIG. 9 is a drawing showing the power transmission path in third gear.

FIG. 7 to FIG. 9 show the power transmission path with a bold line. In the SOWC61, 62 and the clutch 70, elements in the fastened state are shown marked with cross hatching. In the first gear mechanism 40 and the second gear mechanism 50, elements fixed to be unable to rotate are shown marked with cross hatching.

As shown in FIG. 6, the rotation speed of the first sun gear 41 and the second sun gear 51 correlate to the input rotation speed (IN) from the input shaft 31 to the transmission device 4. The rotation speed of the first carrier 45 correlates to the output rotation speed (OUT) from the transmission device 4 to the output shaft 32. With the transmission device 4, the gear shift ratio (OUT/IN) of the first gear is set to be smallest, and the gear shift ratio of the third gear is set to be highest. The gear shift ratio of the second gear is set to be greater than that of the first gear, and smaller than that of the third gear. The third gear is set to a gear shift ratio 1 in which the input rotation speed and the output rotation speed match.

As shown in FIG. 5, in first gear, the SOWC 61 is in a fastened state, the SOWC 62 is in a released state, and the clutch 70 is in a released state.

By driving of the motor 2 (see FIG. 1), as shown in FIG. 7, the input shaft 31 rotates in the one direction DA around the rotation axis X. The one direction DA means the rotation direction when a vehicle travels forward. The one direction DA can be the counterclockwise direction, for example. The other direction DB is the clockwise direction when the one direction DA is the counterclockwise direction.

When the SOWC 61 is in the fastened state, the first ring gear 42 of the first gear mechanism 40 and the second carrier 55 of the second gear mechanism 50 connected to the first ring gear 42 are fixed to be unable to rotate on the gear case 12. For that reason, the pinion gear 53 held in the second carrier 55 does not revolve, but rotates in the other direction DB. In FIG. 7 to FIG. 9, for the pinion gears 43, 53, only the revolving direction is shown with an arrow, and an illustration is omitted for the rotating direction.

The second ring gear 52 does empty rotation in the other direction DB by rotation of the pinion gear 53.

In this way, in first gear, because the second carrier 55 and the first ring gear 42 are fixed, the rotation that is inputted to the second sun gear 51 of the second gear mechanism 50 is not outputted to the first gear mechanism 40.

In the first gear mechanism 40, the first sun gear 41 rotates in the one direction DA, and the first ring gear 42 is fixed without the ability to rotate. The pinion gear 43 that meshes with the first sun gear 41 and the first ring gear 42 rotates in the other direction DB while revolving in the one direction DA. By the revolving of the pinion gear 43, the first carrier 45 rotates in the one direction DA. The rotation of the first carrier 45 is outputted to the output shaft 32.

As shown in FIG. 6, in first gear, the first ring gear 42 is fixed and the rotation count is 0, so the gear shift ratio (OUT/IN) is small. As a result, in first gear, the rotation inputted by the first sun gear 41 is greatly decelerated, and the output rotation speed is the minimum among the first to third gears.

As shown in FIG. 5, in second gear, the SOWC 61 is in a released state, the SOWC 62 is in a fastened state, and the clutch 70 is in a released state.

As shown in FIG. 8, the first sun gear 41 of the first gear mechanism 40 and the second sun gear 51 of the second gear mechanism 50 rotate in the one direction DA integrally with the input shaft 31.

With the SOWC 62 in the fastened state, the second ring gear 52 of the second gear mechanism 50 is fixed to the gear case 12 to be unable to rotate.

The pinion gear 53 that meshes the second sun gear 51 that rotates in the one direction DA and the fixed second ring gear 52 rotates in the other direction DB while revolving in the one direction DA. The second carrier 55 rotates in the one direction DA by revolving of the pinion gear 53. The first ring gear 42 of the first gear mechanism 40 connected to the second carrier 55 also rotates in the one direction DA. Specifically, the rotation outputted from the second carrier 55 of the second gear mechanism 50 is inputted to the first ring gear 42 of the first gear mechanism 40.

The rotation inputted to the first ring gear 42 is shifted by a small gear ratio of the second gear mechanism 50. For that reason, as shown in FIG. 6, the rotation speed of the first ring gear 42 is lower than the rotation speed of the first sun gear 41.

As shown in FIG. 8, by the difference in rotation speed between the first sun gear 41 and the first ring gear 42, the pinion gear 43 rotates in the other direction DB while revolving in the one direction DA. The first carrier 45 rotates in the one direction DA by the revolving of the pinion gear 43. The rotation of the first carrier 45 is outputted to the output shaft 32.

In this way, in second gear, the rotation decelerated by the second gear mechanism 50 is inputted to the first ring gear 42 of the first gear mechanism 40 via the second carrier 55, so the first ring gear 42 rotates at a lower speed than the input rotation speed. As a result, as shown in FIG. 3, in second gear, the gear shift ratio (OUT/IN) is larger than in first gear in which the first ring gear 42 is fixed and does not rotate. The output rotation speed of the second gear is higher than the output rotation speed of the first gear, and is lower than the input rotation speed of the third gear the output rotation speed of the same.

In second gear, instead of having the SOWC 61 in the released state, it is also possible to have it in the engaged state. In this case, the second carrier 55 and the first ring gear 42 are only able to rotate in the one direction DA.

As shown in FIG. 5, in third gear, the SOWC 61, SOWC 62 are in the released state, and the clutch 70 is in the fastened state.

As shown in FIG. 9, the first sun gear 41 of the first gear mechanism 40 and the second sun gear 51 of the second gear mechanism 50 rotate in the one direction DA integrally with the input shaft 31.

As shown in FIG. 2, by the clutch hub 74 and the clutch drum 75 of the clutch 70 being fastened, the second ring gear 52 linked to the clutch drum 75 is directly coupled to the input shaft 31 linked to the clutch hub 74.

By the second sun gear 51 and the second ring gear 52 rotating in the one direction DA at the same rotation speed, the pinion gear 53 revolves in the one direction DA without rotating. The second carrier 55 and the first ring gear 42 connected to the second carrier 55 rotate in the one direction DA at the same rotation speed as the input shaft 31 by the revolving of the pinion gear 53.

Specifically, the first sun gear 41 and the first ring gear 42 of the first gear mechanism 40 rotate in the one direction DA at the same rotation speed as the input shaft 31. The pinion gear 43 that meshes with the first sun gear 41 and the first ring gear 42 revolves in the one direction DA and does not rotate. By the revolving of the pinion gear 43, the first carrier 45 rotates in the one direction DA at the same rotation speed as the input shaft 31. The rotation of the first carrier 45 is outputted to the output shaft 32.

In this way, specifically, in third gear, all six elements of the first gear mechanism 40 and the second gear mechanism 50 rotate at the same rotation speed as the input shaft 31.

In this way, the clutch 70 functions as a direct coupling clutch that equalizes the rotation speed of the input shaft 31 and the output shaft 32. As shown in FIG. 6, in third gear, the first ring gear 42 has the same rotation speed as the input shaft 31, so the gear shift ratio goes to the largest 1. The output rotation speed of the third gear, which matches the input rotation speed, is highest among the first to third gears.

In third gear, instead of having the SOWC 61, 62 be in the released state, these may also be in the engaged state. In this case, the second carrier 55 and the second ring gear 52 are able to rotate only in the one direction DA.

Large torque is required when starting a vehicle and at the stage of accelerating a vehicle. In particular, a larger torque is required during emergency travel of the vehicle. It is possible to make the torque greater by increasing the output of the motor 2, but that may affect the fuel consumption of the vehicle.

Here, the greater the reduction ratio (input rotation speed/output rotation speed) in the transmission device 4, the greater the torque that is output. As described previously, in first gear, the first ring gear 42 is fixed and the rotation speed is 0, so the reduction ratio is the greatest among the first gear to the third gear. Specifically, with the transmission device 4, the reduction ratio is made larger and the torque is increased, so while reducing the output of the motor 2, it is possible to obtain the large torque required during emergency travel.

Meanwhile, large torque is not required when having the vehicle cruise at high speed, but it is preferable to reduce gear meshing loss in the transmission device 4. For that reason, in third gear, the clutch 70 is fastened, and gear shift ratio 1 is set in which all elements of the first gear mechanism 40 and the second gear mechanism 50 rotate at the same rotation speed.

As described above, the clutch 70 is a normally closed type clutch 70, and when the electric actuator 80 is not operated, is in a fastened state by the biasing force of the disc spring 77 (see FIG. 2). When changing the clutch 70 to the released state, the thrust by the electric actuator 80 acts as the load of the compressed disc spring 77 on the bearing B1 that supports the retainer 78 and the bearing B2 that supports the clutch drum 75.

Here, when both the thrust by the electric actuator 80 and the torque by the rotation in the circumferential direction around the rotation axis X act on the bearings B1, B2, the friction of the bearings B1, B2 becomes greater, and this may affect the power consumption of the electric actuator 80 for maintaining the released state of the clutch 70. Also, the longer the time that both the thrust of the electric actuator 80 and the rotational torque act, the greater the possibility of affecting the durability of the bearings B1, B2.

As shown in FIG. 7, in first gear, the clutch 70 is in a released state. The clutch drum 75 linked to the second ring gear 52 rotates in the other direction DB. The retainer 78 that is spline fitted to the clutch drum 75 also rotates in the other direction DB. Specifically, in first gear, both the thrust by the electric actuator 80 and rotational torque act simultaneously on the bearings B1, B2.

As shown in FIG. 8, in second gear, the clutch 70 is in a released state. Because the SOWC 62 is fastened, the second ring gear 52 is fixed without the ability to rotate. For that reason, the clutch drum 75 linked to the second ring gear 52 and the retainer 78 spline fitted to the clutch drum 75 do not rotate. Specifically, in second gear, only thrust by the electric actuator 80 acts, and the rotational torque does not act on the bearings B1, B2.

As shown in FIG. 9, in third gear, the clutch 70 is in a fastened state. The clutch drum 75 linked to the second ring gear 52 rotates in the one direction DA, and the retainer 78 spline fitted to the clutch drum 75 rotates in the one direction DA. Specifically, in third gear, only rotational torque acts, and the thrust by the electric actuator 80 does not act, on the bearings B1, B2.

In this way, with the transmission device 4, both the thrust by the electric actuator 80 and the rotational torque act on the bearings B1, B2 only in first gear. In the present embodiment, the first gear is set in emergency low, and is not selected during normal travel. Specifically, with the transmission device 4 of the present embodiment, the gear position is set so that the time in which both thrust by the electric actuator 80 and rotational torque act on the bearings B1, B2 is shorter.

Here, the clutch 70 can be provided in a form in which the second carrier 55 and the input shaft 31 are directly coupled. However, in this case, the clutch 70 is not linked to the second bearing which is not able to rotate in second gear, so in second gear, both the thrust and rotational torque act on the bearings B1, B2.

Specifically, by disposition of the clutch 70 and setting of the gear position, the transmission device 4 of the present embodiment is able to reduce the time in which both the thrust of the electric actuator 80 and the rotational torque act on the bearings B1, B2. As a result, it is possible to reduce the friction of the bearings B1, B2, and to reduce the power consumption of the electric actuator 80. It is also possible to reduce the effect on durability of the bearings B1, B2.

Hereafter, examples are listed of the transmission device 4 in certain modes of the present invention.
(1) The transmission device 4 has the first planetary gear mechanism 40, the second planetary gear mechanism 50, the SOWC 61 (first fastening mechanism), the SOWC 62 (second fastening mechanism), and the clutch 70 (third fastening mechanism).

The first planetary gear mechanism 40 has the first sun gear 41 connected to the input shaft 31, the first carrier 45 connected to the output shaft 32, and the first ring gear 42.

The second planetary gear mechanism 50 has the second sun gear 51 connected to the input shaft 31, the second carrier 55 connected to the first ring gear 42, and the second ring gear 52,

The SOWC 61 can fasten the first ring gear 42 and the second carrier 55 to the gear case 12 (first fixing element).

The SOWC 62 can fasten the second ring gear 52 to the gear case 12 (second fixing element).

The clutch 70 can fasten the second ring gear 52 to the input shaft 31.

The clutch 70 has the friction plate 71 (fastening element), the pressing part 762, the disc spring 77 (spring), the electric actuator 80 (actuator), and bearings B1, B2 (bearings).

The friction plate 71 is connected to the second ring gear 52 and the input shaft 31. In specific terms, the friction plate 71 has the drive plate 72 and the driven plate 73. The drive plate 72 is connected to the input shaft 31, and the driven plate 73 is connected to the second ring gear 52.

The pressing part 762 fastens the friction plate 71 by pressing the friction plate 71 in the fastening direction which is one end side of the rotation axis X direction (axial direction of the input shaft 31).

The disc spring 77 biases the pressing part 762 in the fastening direction.

The electric actuator 80 generates thrust in the release direction which is the other end side of the rotation axis X direction, and by the pressing part 762 being displaced in the release direction by that thrust, releases the friction plate 71.

The bearings B1, B2 support the retainer 78 and the clutch drum 75 which are the rotating elements of the clutch 70, and when the friction plate 71 is released, receive the load of the disc spring 77 compressed by the thrust.

With the transmission device 4, by switching between fastening and release of SOWC 61, 62, and the clutch 70, the first gear position, the second gear position, and the third gear position are achieved.

In the first gear position, SOWC 61 is fastened, and the SOWC 62 and the clutch 70 are released.

In the second gear position, the SOWC 62 is fastened, and the SOWC 61 and the clutch 70 are released.

In the third gear position, the clutch 70 is fastened, and the SOWC 61 and the SOWC 62 are released.

The second gear position is selected during normal start and during low speed travel.

The third gear position is selected during medium speed travel and during high speed travel.

The first gear position is selected during emergency travel when greater drive force is required than during normal start.

The friction plate 71 of the clutch 70 is fastened by being pressed on the pressing part 762 which is biased in the fastening direction by the disc spring 77. When releasing the clutch 70, the thrust of the actuator displaces the pressing part 762 in the release direction to release.

The bearings B1, B2 support the retainer 78 and the clutch drum 75 that are rotating elements of the clutch 70. For that reason, when these rotating elements rotate, rotational torque is inputted to the bearings B1, B2.

When the clutch 70 is released, the disc spring 77 is compressed by the thrust of the electric actuator 80, so the bearings B1, B2 receive the load of the compressed disc spring 77. Specifically, when the clutch 70 is released, for bearings B1, B2, the thrust of the electric actuator 80 acts as the load of the disc spring 77.

When both the rotational torque and the thrust of the electric actuator 80 act on the bearings B1, B2, the friction of the bearings B1, B2 increases. Specifically, the longer time that both the rotational torque and the thrust of the electric actuator 80 act, the greater the possibility of affecting the durability of the bearings B1, B2.

In the present embodiment, the clutch 70 is a direct coupling clutch that directly couples the second ring gear 52 and the input shaft 31. Also, the clutch 70 is released at the first gear position and the second gear position, and is fastened at the third gear position. In the second gear position, to have the SOWC 62 fastened, the second ring gear 52 is fixed to be unable to rotate.

Specifically, in the present embodiment, only in the first gear position do both the rotational torque and the electric actuator 80 act on the bearings B1, B2 of the clutch 70.

Also, in the present embodiment, with the first gear position for emergency low, this gear position is selected only during emergency travel. As a result, in the present embodiment, compared to when using the first gear position during normal start and during low speed travel, it is possible to reduce the time when both the rotational torque and the electric actuator 80 act on the bearings B1, B2. Specifically, it is possible to reduce the time in which large friction is generated on the bearings B1, B2, and to reduce the decrease in durability of the bearings B1, B2.

(2) The clutch 70 has the piston 76 and the retainer 78.

The piston 76 comprises the pressing part 762. The pressing part 762 is disposed facing the other end side of the rotation axis X direction with respect to the friction plate 71.

The retainer 78 is disposed facing the other end side of the rotation axis X direction with respect to the pressing part 762, and holds the disc spring 77 between itself and the pressing part 762.

The clutch 70 comprises the bearing B1 (first bearing) that supports the retainer 78 which is the rotating element on the clutch case 13 (third fixing element).

The actuator is the electric actuator 80 that displaces the piston 76 in the rotation axis X direction. The electric actuator 80 has a part that overlaps the piston76 when viewed from the rotation axis X direction.

The retainer 78 which is a rotating element holds the disc spring 77 between itself and the pressing part 762. For that reason, the rotational torque by rotation of the retainer 78 and the thrust by the electric actuator 80 act on the bearing B1 that supports the retainer 78. As described previously, in the present embodiment, the time in which both the thrust of the electric actuator 80 and the rotational torque simultaneously act on the bearing B1 is reduced. For that reason, it is possible to reduce the effect on the durability of the bearing B1.

The actuator that displaces the piston 76 can also be a hydraulic actuator, for example. The hydraulic actuator has an oil chamber provided between the clutch drum 75 and the piston 76, and supplies hydraulic pressure to the oil chamber and displaces the piston 76. For that reason, when using the hydraulic actuator, it is necessary to provide a hydraulic pressure supply circuit to the transmission device 4. To supply sufficient hydraulic pressure to displace the piston 76, it is necessary to make the oil chamber large, so there is a tendency to make the clutch drum 75 and the piston 76 larger.

In the present embodiment, the electric actuator 80 is used as the actuator. For that reason, it is not necessary to provide the hydraulic pressure supply circuit to the transmission device 4. Also, because it is not necessary to provide the oil chamber, it is possible to reduce the increase in size of the clutch drum 75 and the piston 76.

Furthermore, in the present embodiment, the electric actuator 80 is disposed so as to have a part that overlaps the piston 76 when viewed from the rotation axis X direction. Specifically, the electric actuator 80 is disposed to align with the friction plate 71 and the piston 76 in the rotation axis X direction. As a result, it is possible to reduce the increase in size of the transmission device 4 in the radial direction of the rotation axis X.

(3) The clutch 70 has the clutch hub 74 and the clutch drum 75 as the rotating elements.

The clutch hub 74 is connected to the input shaft 31.

The clutch drum 75 is disposed on the outer periphery of the clutch hub 74, and is connected to the second ring gear 52.

The friction plate 71 has:
the drive plate 72 (first friction plate) that is disposed between the clutch hub 74 and the clutch drum 75 in the rotation axis X radial direction (radial direction of the input shaft 31) and is engaged with the clutch hub 74, and
the driven plate 73 (second friction plate) that is disposed between the clutch hub 74 and the clutch drum 75 in the rotation axis X radial direction and is engaged with the clutch drum 75.

The pressing part 762 of the piston 76 and the retainer 78 are engaged with the inner periphery of the clutch drum 75, and disposed facing the other end side in the rotation axis X direction with respect to the drive plate 72 and the driven plate 73.

The bearing has a bearing B2 (second bearing) that supports the clutch drum 75 on the clutch case 13.

With the clutch 70 of the present embodiment, the clutch hub 74 is housed in the inner periphery of the clutch drum 75, and the drive plate 72 and the driven plate 73 are disposed aligned between the clutch drum 75 and the clutch hub 74. Specifically, the clutch drum 75 which is the rotating element linked to the second ring gear 52 and the clutch hub 74 which is the rotating element linked to the input shaft 31 are disposed overlapping in the radial direction of the rotation axis X. As a result, it is possible to reduce the size expansion in the rotation axis X direction for the transmission device 4.

The retainer 78 which holds the disc spring 77 and the piston 76 are engaged with the clutch drum 75 which is a rotating element. For that reason, the rotational torque by rotation of the clutch drum 75 and the thrust by the electric actuator 80 act on the bearing B2 that supports the clutch drum 75. As described previously, in the present embodiment, the time in which both the thrust of the electric actuator 80 and the rotational torque act simultaneously on the bearing B2 is reduced. For that reason, it is possible to reduce the effect on the durability of the bearing B2.

(4) The transmission device 4 has the plate member 15 linked to the clutch case 13 and positioned at the other end side in the rotation axis X direction with respect to the retainer 78.

The retainer 78 has the holding unit 781 and the cylinder part 782. The holding unit 781 is positioned between the pressing part 762 and the plate member 15 in the rotation axis X direction, and holds the disc spring 77 between itself and the pressing part 762. The cylinder part 782 is provided on the inner periphery of the holding unit 781 and extends to the other end side in the rotation axis X direction.

The piston 76 has the base 761 that is connected to the inner diameter side of the pressing part 762 and extends along the rotation axis X direction.

The inner periphery of the cylinder part 782 is externally fitted with the ability to rotate relatively with respect to the base 761 of the piston 76, and the outer periphery of the cylinder part 782 is supported on the plate member 15 via the bearing B1 (first bearing).

When viewed from the radial direction of the rotation axis X, the first bearing B1 is provided at a position overlapping the cylinder part 782 of the retainer 78 and the base 761 of the piston 76.

The piston 76 and the retainer 78 are provided along the rotation axis X. When the piston 76 and the retainer 78 are tilted with respect to the rotation axis X direction, when the clutch 70 is in the released state, it is possible that the piston 76 will contact the friction plate 71. In this case, drag torque occurs on the friction plate 71, and there is a possibility that the power consumption of the motor 2 will increase. In the present embodiment, the cylinder part 782 of the retainer 78 and the base 761 of the piston 76 are disposed so as to overlap the bearing B1 when viewed from the radial direction of the rotation axis X. Said another way, both the cylinder part 782 of the retainer 78 and the base 761 of the piston 76 are supported by the bearing B1. As a result, it is possible to reduce the tilting of the piston 76 and the retainer 78 with respect to the rotation axis X.

(5) The electric actuator 80 has the drive gear 83, the first driven gear 84 and the second driven gear 85 (driven gears), and the cam mechanism. The cam mechanism, in specific terms, is constituted by the cam grooves 843, 853 of the first driven gear 84 and the second driven gear 85, and the rolling body Rb held between the cam grooves 843, 853.

The drive gear 83 is disposed on the outer periphery of the base 761 of the piston 76, and rotates around the axis line X1 along the rotation axis X direction.

The first driven gear 84 and the second driven gear 85 are disposed between the drive gear 83 and the base 761 of the piston 76 in the radial direction of the rotation axis X, and mesh with the drive gear 83.

The cam mechanism moves the second driven gear 85 along the rotation axis X direction by converting rotational motion inputted to the first driven gear 84 and the second driven gear 85 from the drive gear 83 to linear motion.

The piston 76 has a facing part 763 that extends to the outer diameter side from the base 761, and faces the other end side in the rotation axis X direction with respect to the second driven gear 85.

The second driven gear 85 is disposed between the plate member 15 and the facing part 763 of the piston 76.

By moving to the other end side in the rotation axis X direction and pressing the facing part 763 of the piston 76, the second driven gear 85 displaces the piston 76 to the other end side in the rotation axis X direction.

By using a linear actuator that converts the rotational motion of the drive gear 83 to linear motion of the driven gear as the electric actuator 80, it is possible to reduce the size of the electric actuator 80.

Also, in the present embodiment, the first driven gear 84 and the second driven gear 85 are disposed between the facing part 763 of the piston 76 and the plate member 15, and the drive gear 83 is disposed on the first driven gear 84 and the second driven gear 85 outer diameter side. As a result, it is possible to reduce the increase in size of the transmission device 4 in the rotation axis X direction.
(i) The input shaft 31 is connected to the motor 2 (drive source).

The output shaft 32 is connected to the differential mechanism 9.

The output shaft 32 has a part that overlaps the input shaft 31 in the radial direction of the rotation axis X.

The differential mechanism 9 is disposed between the motor 2 and the first planetary gear mechanism 40 and the second planetary gear mechanism 50 in the rotation axis X direction.

The clutch 70 is positioned on the opposite side to the differential mechanism 9 in the rotation axis X direction with respect to the first planetary gear mechanism 40 and the second planetary gear mechanism 50.

Using such a structure, it is possible to reduce a size increase in the radial direction of the rotation axis X for the power transmission device 1. In particular, in a structure in which the output shaft 32 is folded back to the input shaft 31 side, space is easily generated on the side opposite to the input shaft 31 and the output shaft 32 of the power transmission device 1 in the rotation axis X direction. For example, by disposing the clutch 70 or the electric actuator 80 in this space, it is possible to effectively use this space, which is advantageous for the layout.

Also, the element connected with the differential mechanism 9 is disposed sandwiched between the first planetary gear mechanism 40 or the second planetary gear mechanism 50 and the motor 2 in the rotation axis X direction. Using such a structure, with the differential mechanism 9 as the center, the motor 2 and the transmission device 4 are disposed on both sides, so it is possible to increase the weight balance for the device overall.

In the embodiment noted above, as shown in FIG. 1, an example was explained in which the SOWC 61 (first fastening mechanism) is connected to the first ring gear 42, but the invention is not limited to this mode. The SOWC 61 may also be connected to the carrier plate 55b of the second carrier 55.

The first ring gear 42 is connected to the carrier plate 55b. For that reason, by connecting the SOWC 61 to the carrier plate 55b of the second carrier 55, when the SOWC 61 is in the fastened state, it is possible to fix the first ring gear 42 to be unable to rotate.

In the present embodiment, an example was shown in which the device of one mode of the present invention is applied to the power transmission device 1 mounted in the vehicle, but the invention is not limited to this mode. The device of one mode of the present invention can also be applied to something other than a vehicle. Also, when a plurality of working examples and modification examples are noted for the present embodiment, these may also be combined in any manner.

Above, an embodiment of the present invention was explained, but the embodiment noted above merely shows one application example of the present invention, and the claims of the present invention are not limited to the specific structure of the embodiment noted above. Suitable modifications are possible within the scope of the technical concept of the invention.

### [Explanation of Codes]

- 1: Power transmission device
- 4: Transmission device
- 12: Gear case (first fixing element, second fixing element)
- 13: Clutch case (third fixing element)
- 15: Plate member
- 31: Input shaft
- 32: Output shaft
- 40: First planetary gear mechanism (first gear mechanism)
- 41: First sun gear
- 42: First ring gear
- 45: First carrier
- 50: Second planetary gear mechanism (second gear mechanism)
- 51: Second sun gear
- 52: Second ring gear
- 55: Second carrier
- 61: Selectable one-way clutch (SOWC) (first fastening mechanism)
- 62: Selectable one-way clutch (SOWC) (second fastening mechanism)
- 70: Clutch (third fastening mechanism)
- 71: Friction plate (fastening element)
- 72: Drive plate (first friction plate)
- 73: Driven plate (second friction plate)
- 74: Clutch hub (rotating element)
- 75: Clutch drum (rotating element)
- 76: Piston
- 761: Base
- 762: Pressing part
- 763: Facing part
- 77: Disc spring (spring)
- 78: Retainer (rotating element)
- 781: Holding unit
- 782: Cylinder part
- 80: Electric actuator (actuator)
- 83: Drive gear
- 84: First driven gear (driven gear)
- 85: Second driven gear (driven gear)
- 843, 853: Cam groove (cam mechanism)
- B1, B2: Bearing
- Rb: Rolling body (cam mechanism)
- X: Rotation shaft
- X1: Axis line

## Claims

1. A transmission device comprising:
a first planetary gear mechanism having a first sun gear connected to an input shaft, a first carrier connected to an output shaft, and a first ring gear;
a second planetary gear mechanism having a second sun gear connected to the input shaft, a second carrier connected to the first ring gear, and a second ring gear;
a first fastening mechanism that can fasten the first ring gear and the second carrier to a first fixing element;
a second fastening mechanism that can fasten the second ring gear to a second fixing element; and
a third fastening member that can fasten the second ring gear to the input shaft, wherein
the third fastening mechanism has
a fastening element that is connected to the second ring gear and the input shaft,
a pressing part that fastens the fastening element by pressing the fastening element in the fastening direction which is one end side of the axial direction of the input shaft,
a spring that biases the pressing part in the fastening direction,
an actuator that generates thrust in the release direction which is the other end side of the axial direction of the input shaft, and by the pressing part being displaced in the release direction by that thrust, releases the fastening element, and
a bearing that supports a rotating element of the third fastening mechanism, and when the fastening element is released, receives the load of the spring compressed by the thrust, where
by switching between fastening and release of the first fastening mechanism, the second fastening mechanism, and the third fastening mechanism, a first gear position, a second gear position, and a third gear position are achieved,
in the first gear position, the first fastening mechanism is fastened, and the second fastening mechanism and the third fastening mechanism are released,
in the secondi gear position, the second fastening mechanism is fastened, and the first fastening mechanism and the third fastening mechanism are released,
in the third gear position, the third fastening mechanism is fastened, and the first fastening mechanism and the second fastening mechanism are released,
the second gear position is selected during normal start and during low speed travel,
the third gear position is selected during medium speed travel and during high speed travel, and
the first gear position is selected during emergency travel when greater drive force is required than during normal start.

2. The transmission device according to claim 1, wherein
the third fastening mechanism has a piston disposed facing the other end side of the axial direction with respect to the fastening element, and provided with the pressing part, and
a retainer that is disposed facing the other end side of the axial direction with respect to the pressing part, and holds the spring between itself and the pressing part,
the bearing comprises a first bearing that supports the retainer which is a rotating element on the third fixing element, and
the actuator is an electric actuator that displaces the piston in the axial direction, and the electric actuator has a part that overlaps the piston when viewed from the axial direction.

3. The transmission device according to claim 2, wherein
the third fastening mechanism, as the rotating element, has
a clutch hub that is connected to the input shaft, and
a clutch drum that is disposed on the outer periphery of the clutch hub, and is connected to the second ring gear,
the fastening element has
a first friction plate that is disposed between the clutch hub and the clutch drum in the radial direction of the input shaft and is engaged with the clutch hub, and
a second friction plate that is disposed between the clutch hub and the clutch drum in the radial direction of the input shaft and is engaged with the clutch drum,
the pressing part of the piston and the retainer are engaged with the inner periphery of the clutch drum, and disposed facing the other end side in the axial direction with respect to the first friction plate and the second friction plate, and
the bearing has a second bearing that supports the clutch drum on the third fixing element.

4. The transmission device according to claim 2 or 3,
having a plate member linked to the third fixing element, and positioned at the other end side in the axial direction with respect to the retainer,
the retainer has a holding unit that is positioned between the pressing part and the plate member in the axial direction, and holds the spring between itself and the pressing part, and a cylinder part that is provided on the inner periphery of the holding unit, and extends to the other end side in the axial direction,
the piston has a base that is connected to the inner diameter side of the pressing part, and extends along the axial direction,
the inner periphery of the cylinder part of the retainer is externally fitted with the ability to rotate relatively with respect to the base of the piston, and the outer periphery of the cylinder part is supported on the plate member via the first bearing, and
when viewed from the radial direction of the input shaft, the first bearing is provided at a position overlapping the cylinder part and the base.

5. The transmission device according to claim 4, wherein
the electric actuator has
a drive gear that is disposed on the outer periphery of the base of the piston, and rotates around the axis line along the axial direction,
a driven gear that is disposed between the drive gear and the base of the piston in the radial direction of the input shaft, and that meshes with the drive gear, and
a cam mechanism that moves the driven gear along the axial direction by converting rotational motion inputted to the driven gear from the drive gear to linear motion, wherein
the piston has a facing part that extends to the outer diameter side from the base, and faces the other end side in the axial direction with respect to the driven gear,
the driven gear is disposed between the plate member and the facing part of the piston, and
the driven gear, by moving to the other end side in the axial direction and pressing the facing part of the piston, displaces the piston to the other end side in the axial direction.
